# EUROPEAN PATENT SPECIFICATION

(11) **EP 0 579 184 B1**
(45) Date of publication and mention of the grant of the patent: **13.11.1996**
(21) Application number: 93111229.6
(22) Date of filing: 13.07.1993
(51) Int. Cl.: B60Q 1/04, F21M 3/16

(54) **Vehicle, in particular motor vehicle, headlight**
Scheinwerfer für Kraftfahrzeuge
Phare de véhicule

(30) Priority: 17.07.1992 IT TO920614
(43) Date of publication of application: 19.01.1994
(73) Proprietor: MAGNETI MARELLI S.p.A., 20145 Milano (IT)
(72) Inventor: Lucca, Giovanni, 10090 Rivoli (IT)
(74) Representative: Jorio, Paolo

(56) References cited:
- EP-A- 0 071 558
- FR-A- 2 629 566
- GB-A- 2 248 293

## Description

The present invention relates to a vehicle, in particular motor vehicle, headlight.

Vehicle headlights comprising an outer cup-shaped casing which is closed off by a transparent element and which houses a reflector fitted with at least one main light source formed by an incandescent lamp are known. These headlights also comprise an auxiliary lamp of less light-emitting power than the main light source and which is advantageously used as a side light.

Prior art document GB-A-2 248 293 shows a clearance light of low light emitting power for indicating the presence of the vehicle on the road to other drivers. The clearance light is situated between two main reflectors and on the periphery of these. The two part form of claim 1 is based on this document.

Document EP-A-0 071 558 shows a combined lamp comprising a first reflector and a first bulb providing a broad distribution of light. A second reflector situated oppositely to and in front of the first reflector provides, by means of a second bulb situated axially in front of the first bulb and between the reflectors, a spot light, by reflecting light from the second bulb onto the first reflector.

In the combined headlamp known from GB-A-2 248 293, the light distributed by the auxiliary lamp seems to come from a small distinct area in the combined headlamp. This is considered as an aesthetical drawback. The technical problem underlying the present invention resides in providing a means, which offers a homogenous light output from the combined lamp or headlamp casing such as to overcome the above drawback.

The above object is achieved by the present invention as defined in claim 1.

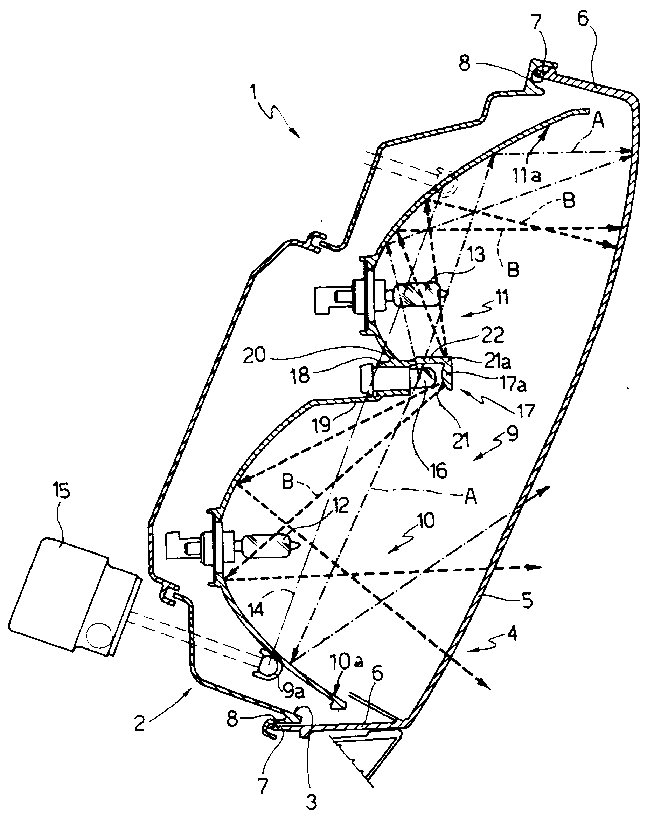

The invention will be illustrated with reference to the attached drawing which shows, in transverse section, a headlight produced according to the provisions of the present invention.

In the attached figure, 1 indicates, as a whole, a vehicle, in particular motor vehicle, headlight, comprising an outer cup-shaped casing 2 defining a front aperture 3 which is closed off by a transparent cup-shaped element 4 comprising a front wall 5 and an annular peripheral wall 6 which extends from the wall 5 towards the casing 2 and whose extreme edges 7 are housed in a front annular groove 8 of the casing 2.

Housed in the casing 2 is a lighting unit 9 comprising a first reflector 10 and a second reflector 11 which are integral with each other and have respective reflective surfaces 10a and 11a. The reflectors 10 and 11 house respective light sources 12 and 13 formed by incandescent lamps of known type which are used to produce a main and a dipped type light beam respectively.

The lighting unit 9 is hinged onto the casing 2 and can be pivoted in a known manner with respect to it, about a horizontal axis 14 under the action of an actuator 15 (for example an electric motor) located outside the casing 2 and fitted with an output shaft (shown by the dashed line) which is coupled to a rear portion 9a of the lighting unit 9.

The lighting unit 9 is also fitted with an auxiliary light source 16 (used as a side light) located between the first and the second reflector 10, 11 and coupled to a reflective device 17. This source 16 is formed by an incandescent lamp which has less light-emitting power than the lamps 12 and 13 and is carried by a tubular base 18 which is integral with adjacent peripheral portions 19 and 20 of the reflectors 10 and 11.

The reflective device 17 comprises a body 17a which faces the lamp 16 and is limited by a dome-shaped reflective surface 21 which is positioned with its convex surface facing the light source 16. The body 17a is integral with a straight part 22 which extends out from and in one piece with a peripheral portion 21a of the surface 21 on the base 18.

The curvature of the dome-shaped surface 21 is calculated on the basis of the shape and the positioning in space of the surfaces 10a and 11a with respect to the light source 16. The curvature of the surface 21 is calculated using a computer (not shown) which processes a set of data representing the surfaces 10a and 11a and obtains a set of parameters which give the curvature of the surface 21.

In particular, the dome-shaped surface 21 reflects the rays produced by the source 16 towards the reflectors 10 and 11 in such a way that the reflective surfaces 10a and 11a are evenly lit across their whole area and the reflectors 10 and 11, when seen through the transparent element 5, provide even lighting.

During use, when the auxiliary lamp 16 is switched on the rays produced thereby reach the reflectors 10 and 11 and the device 17; in particular, a first part of the rays (indicated with the letter A) is directly incident on the surfaces 10a and 11a and are reflected thereby towards the transparent element 4, while a second part of the rays (indicated with the letter B) is incident on the surface 21 from which they are reflected towards the reflectors 10 and 11.

The light beam exiting the transparent element 4, which is chiefly made up of the sum of the light rays A plus B, has a substantially constant spatial power density because the reflective surface 21 provides additional light for those areas of the surfaces 10a and 11a which do not receive as many light rays directly from the source 16. In this way, when seen through the transparent element 4, the reflectors 10, 11 provide substantially uniform lighting.

It is clear from the above that the headlight described solves the drawbacks inherent in known headlights since the reflectors 10 and 11, when seen through the transparent element 4, provide substantially even lighting.

The headlight described also has a further advantage from an aesthetic point of view and that is that the body 17 shields the filament of the lamp 16 so that it cannot be seen through the transparent element 4.

It will be understood that modifications and variations may be made to the present headlight without thereby departing from the protective scope of said invention.

For example, the reflective surface 21 could be carried by the transparent element 4 and could be made by metallising an end portion (not shown) of a part (not shown) extending from the front wall 5 towards the auxiliary light source 16.

The dome-shaped surface 21 could also have a hemispherical dome-shaped profile and in this case said surface would reflect the rays produced by the source 16 in a spatially uniform manner.

## Claims

1. Vehicle, in particular motor vehicle, headlight comprising:
- an outer cup-shaped casing (2) defining a front aperture (3);
- a transparent element (4) placed so as to close off said aperture (3);
- at least one main reflector (10,11) housed in said casing (2) and fitted with a main light source (11,12);
- an auxiliary light source (16) housed in said casing (2); and
- an auxiliary reflector (17) which interacts with said auxiliary light source (16) and which receives at least some (A) of the light rays emitted by said auxiliary light source (16),
wherein said auxiliary light source (16) is located close to a peripheral portion (19,20) of the main reflector (10,11), characterized in that said auxiliary reflector (17) is convex;
said auxiliary reflector (17) reflecting said rays towards said main reflector (10,11) so that the light beam exiting the transparent element (4) having a substantially constant spatial power density and said main reflector (10,11) provides, when seen through said transparent element (4), substantially uniform lighting.

2. Headlight according to claim 1, characterized in that said auxiliary reflector (17) has a reflective surface (21) for providing additional light for those portions of said reflector (10,11) which do not receive as many light rays directly from said auxiliary light source (16).

3. Headlight according to claim 1 or 2, in which said casing (2) houses a first and a second reflector (10,11), each of these being fitted with a respective light source (12,13), characterized in that said auxiliary light source (16) is located between said first and a said second reflector (10,11);
said auxiliary reflector (17) diverting said rays (A) towards said first (10) and said second (11) reflector so that the light beam exiting the transparent element (4) having a substantially constant spatial power density and said first (10) and said second (11) reflector, when seen through said transparent element (4), provide substantially uniform lighting.

4. Headlight according to claim 3, characterized in that said first (10) and said second reflector (11) are integral with each other.

5. Headlight according to claim 4, characterized in that said auxiliary light source (16) is carried by a support (18) which is made integral with said first (10) and second (11) reflector.

6. Headlight according to any one of the preceding claims , characterized in that said auxiliary reflector (17) comprises a reflective surface (21) which faces said auxiliary light source (16).

7. Headlight according to claim 6, characterized in that said reflective surface (21) is substantially dome-shaped and is positioned with its convex surface facing said auxiliary light source (16).

8. Headlight according to claim 7, characterized in that said reflective surface (21) is substantially spherically dome-shaped.

9. Headlight according to claims 6, 7 or 8, characterized in that said reflective surface (21) is made on a body (17a) which is integral with said reflector (10,11).

10. Headlight according to claim 9, characterized in that sad reflective surface (21) is integral with a part (22) extending from a peripheral portion of the said body (17a) to said reflector (10,11),

## Patentansprüche

1. Fahrzeug-, insbesondere Kraftfahrzeugscheinwerfer, umfassend:
- ein äußeres napfförmiges Gehäuse (2), das eine Frontöffnung (3) begrenzt;
- ein transparentes Element (4), das zum Schließen der Öffnung (3) angeordnet ist;
- wenigstens einen Hauptreflektor (10, 11), der in dem Gehäuse (2) untergebracht ist und in den eine Hauptlichtquelle (11, 12) eingefügt ist;
- eine Nebenlichtquelle (16), die in dem Gehäuse (2) untergebracht ist; und
- einen Nebenreflektor (17), der mit der Nebenlichtquelle (16) zusammenwirkt und wenigstens einige (A) der von` der Nebenlichtquelle (16) ausgesandten Lichtstrahlen erhält,
bei dem die Nebenlichtquelle (16) nahe an einem peripheren Abschnitt (19, 20) des Hauptreflektors (10, 11) angeordnet ist, dadurch gekennzeichnet, daß der Nebenreflektor (17) konvex ist;
wobei der Nebenreflektor (17) die Strahlen in Richtung auf den Hauptreflektor (10, 11) reflektiert, so daß der Lichtstrahl, der aus dem transparenten Element (4) austritt, eine im wesentlichen konstante räumliche Leistungsdichte aufweist, und der Hauptreflektor (10, 11) bei Betrachtung durch das transparente Element (4) eine im wesentlichen gleichförmige Ausleuchtung aufweist.

2. Scheinwerfer nach Anspruch 1, dadurch gekennzeichnet, daß der Nebenreflektor (17) eine reflektierende Oberfläche (21) zur Versorgung jener Abschnitte des Reflektors (10, 11) mit zusätzlichem Licht aufweist, die nicht so viele Lichtstrahlen direkt von der Nebenlichtquelle (16) erhalten.

3. Scheinwerfer nach Anspruch 1 oder 2, bei dem in dem Gehäuse (2) ein erster und ein zweiter Reflektor (10, 11) untergebracht sind, in jeden davon eine zugehörige Lichtquelle (12, 13) eingefügt ist, dadurch gekennzeichnet, daß die Nebenlichtquelle (16) zwischen dem ersten und dem zweiten Reflektor (10, 11) angeordnet ist;
wobei der Nebenreflektor (17) die Strahlen (A) in Richtung auf den ersten (10) und den zweiten (11) Reflektor ablenkt, so daß der aus dem transparenten Element (4) austretende Lichtstrahl eine im wesentlichen konstante räumliche Leistungsdichte aufweist und der erste (10) und der zweite (11) Reflektor bei Betrachtung durch das transparente Element (4) eine im wesentlichen gleichförmige Ausleuchtung aufweisen.

4. Scheinwerfer nach Anspruch 3, dadurch gekennzeichnet, daß der erste (10) und der zweite (11) Reflektor miteinander einstückig sind.

5. Scheinwerfer nach Anspruch 4, dadurch gekennzeichnet, daß die Nebenlichtquelle (16) von einem Träger (18) abgestützt ist, der einstückig mit dem ersten (10) und dem zweiten (11) Reflektor ausgebildet ist.

6. Scheinwerfer nach einem der vorangegangenen Ansprüche, dadurch gekennzeichnet, daß der Nebenreflektor (17) eine reflektierende Oberfläche (21) umfaßt, die der Nebenlichtquelle (16) zugekehrt ist.

7. Scheinwerfer nach Anspruch 6, dadurch gekennzeichnet, daß die reflektierende Oberfläche (21) im wesentlichen kuppelförmig und mit ihrer konvexen Oberfläche der Nebenlichtquelle (16) zugekehrt angeordnet ist.

8. Scheinwerfer nach Anspruch 7, dadurch gekennzeichnet, daß die reflektierende Oberfläche (21) im wesentlichen sphärisch kuppelförmig ist.

9. Scheinwerfer nach einem der Ansprüche 6, 7 oder 8, dadurch gekennzeichnet, daß die reflektierende Oberfläche (21) aus einem mit dem Reflektor (10, 11) einstückigen Korpus (17a) hergestellt ist.

10. Scheinwerfer nach Anspruch 9, dadurch gekennzeichnet, daß die reflektierende Oberfläche (21) einstückig mit einem Teil (22) ist, das sich von einem peripheren Abschnitt des Korpus (17a) zu dem Reflektor (10, 11) erstreckt.

## Revendications

1. Phare de véhicule, en particulier de véhicule automobile, comprenant :
- un boîtier extérieur (2) en forme de coupelle, définissant une ouverture avant (3);
- un élément transparent (4) placé de manière à fermer ladite ouverture (3);
- au moins un réflecteur principal (10, 11) logé dans ledit boîtier (2) et pourvu d'une source de lumière (11, 12) principale;
- une source de lumière (16) auxiliaire logée dans ledit boîtier (2); et
- un réflecteur auxiliaire (17), interagissant avec ladite source de lumière (16) auxiliaire et recevant au moins une partie (A) des rayons de lumière émis par ladite source de lumière (16) auxiliaire,
dans lequel ladite source de lumière (16) auxiliaire se trouve à proximité d'une partie périphérique (19, 20) du réflecteur principal (10, 11), caractérisé en ce que ledit réflecteur auxiliaire (17) est de forme convexe;
ledit réflecteur auxiliaire (17) réfléchissant lesdits rayons vers ledit réflecteur principal (10, 11), de manière que le faisceau de lumière sortant de l'élément transparent (4) présente une puissance volumique spatiale sensiblement constante et que ledit réflecteur principal (10, 11) fournisse, lorsque l'on regarde à travers ledit élément transparent (4), un éclairage sensiblement uniforme.

2. Phare selon la revendication 1, caractérisé en ce que ledit réflecteur auxiliaire (17) présente une surface réfléchissante (21) pour fournir un supplément de lumière aux parties dudit réflecteur (10, 11) qui ne reçoivent pas autant de rayons de lumière directement de ladite source de lumière (16) auxiliaire.

3. Phare selon la revendication 1 ou 2, dans lequel ledit boîtier (2) loge des premier et deuxième réflecteurs (10, 11), chacun d'entre eux étant pourvu d'une source de lumière (12, 13) respective, caractérisé en ce que ladite source de lumière (16) auxiliaire se trouve entre lesdits premier et deuxième réflecteurs (10, 11);
ledit réflecteur auxiliaire (17) déviant lesdits rayons (A) vers ledit premier (10) et ledit deuxième (11) réflecteur, de manière que le faisceau de lumière sortant de l'élément transparent (4) présente une puissance volumique spatiale sensiblement constante et que lesdits premier (10) et deuxième (11) réflecteurs, lorsque l'on regarde à travers ledit élément transparent (4), fournissent un éclairage sensiblement uniforme.

4. Phare selon la revendication 3, caractérisé en ce que lesdits premier (10) et deuxième (11) réflecteurs sont réalisés d'un seul tenant entre eux.

5. Phare selon la revendication 4, caractérisé en ce que ladite source de lumière (16) auxiliaire est portée par un support (18) qui est réalisé d'un seul tenant avec lesdits premier (10) et deuxième (11) réflecteurs.

6. Phare selon l'une quelconque des revendications précédentes, caractérisé en ce que ledit réflecteur auxiliaire (17) comprend une surface réfléchissante (21) qui est tournée vers ladite source de lumière (16) auxiliaire.

7. Phare selon la revendication 6, caractérisé en ce que ladite surface réfléchissante (21) est sensiblement en forme de dôme et est disposée de manière que sa surface convexe soit tournée vers ladite source de lumière (16) auxiliaire.

8. Phare selon la revendication 7, caractérisé en ce que ladite surface réfléchissante (21) est en forme de dôme sensiblement sphérique.

9. Phare selon la revendication 6, 7 ou 8, caractérisé en ce que ladite surface réfléchissante (21) est réalisée sur un corps (17a) qui est d'un seul tenant avec ledit réflecteur (10, 11).

10. Phare selon la revendication 9, caractérisé en ce que ladite surface réfléchissante (21) est d'un seul tenant avec une partie (22) s'étendant depuis une partie périphérique dudit corps (17a), jusqu'audit réflecteur (10, 11).
